# EUROPEAN PATENT SPECIFICATION

(11) **EP 3 339 598 B1**
(45) Date of publication and mention of the grant of the patent: **18.03.2020**
(21) Application number: 16206729.2
(22) Date of filing: 23.12.2016
(51) Int. Cl.: F01N 13/08, F01N 13/18, F01N 11/00

(54) **METHOD OF FIXATION OF AN OUTER RING FOR A FLEXIBLE ELEMENT, SAID OUTER RING FOR THE METHOD, AND FLEXIBLE CONDUIT ELEMENT WITH SAID OUTER RING**
VERFAHREN ZUR BEFESTIGUNG EINES AUSSENRINGS FÜR EIN FLEXIBLES ELEMENT, BESAGTER AUSSENRING FÜR DAS VERFAHREN UND FLEXIBLES LEITUNGSELEMENT MIT BESAGTEM AUSSENRING
PROCÉDÉ DE FIXATION D'UNE BAGUE EXTÉRIEURE POUR UN ÉLÉMENT FLEXIBLE, LADITE BAGUE EXTÉRIEURE POUR LEDIT PROCÉDÉ ET ÉLÉMENT DE CONDUITE DOTÉ DE LADITE BAGUE EXTÉRIEURE

(43) Date of publication of application: 27.06.2018
(73) Proprietor: Sjm Co., Ltd., Kyungki Province 425-100 (KR)
(72) Inventor: Webel, Uwe, 76877 Offenbach (DE); Lee, Jae Kwang, 68163 Mannheim (DE)
(74) Representative: Grünecker Patent- und Rechtsanwälte PartG mbB

(56) References cited:
- WO-A1-2015/144229
- DE-U1- 20 317 596
- US-A1- 2003 102 666
- US-A1- 2015 076 814
- US-B2- 8 844 579

## Description

The invention relates to a method of fixation of an outer ring for a flexible conduit element and securing the flexible conduit element to an exhaust gas component for a combustion engine or an exhaust gas system for a combustion engine vehicle, and to a system formed wherein the outer ring is fixed and the flexible conduit element is secured using the method.

A flexible conduit element of the aforementioned kind is known from DE 10 2004 041 348 A1. Such flexible conduit elements are commonly used in the automotive industry. They are placed within the exhaust system of a combustion engine vehicle between the exhaust pipe leading from the engine and the muffler. The flexible conduit element serves as a decoupler joint in the exhaust system, and is exposed to heat and vibration as well as impact loads which are caused by operation of the engine and engine roll when starting the engine or during acceleration and braking or gear shifting. Also, road condition may generate vibrations of an exhaust pipe.

In the prior art the flexible conduit element must be securely fixed with one end to an combustion exit mouth or connection pipe of an combustion engine and with the other end to an combustion enter mouth of an exhaust pipe leading. The fixation of the flexible conduit element with its both ends is performed with a single weld at each connection end of the flexible conduit element. For welding of each end of the flexible conduit element there is normally enough space. Thus a connecting means like a tube can be used to connect the flexible conduit element with the engine and / or the exhaust pipe system. However, in some circumstances the tube requires too much space and then the flexible conduit element cannot properly be welded to the adjacent engine or exhaust pipe system.

Additionally, the weld must also be gas tight, such that the combustion gases do not leak out at the welded connection. Since the weld must also ensure the gas tightness between the components of the flexible conduit element and the connection a control of the welded connection is necessary, but, it is difficult to control whether the one weld is gas tight.

Thus, also space for an optical control must be provided. However, if the weld is not gas tight the whole weld must be dissolved and / or revised wherein components of the flexible conduit element may be negatively affected.

A method of fixation of an outer ring for a flexible conduit element and securing the flexible conduit element according to the preamble of independent claim 1 is disclosed in DE 203 17 596 U1.

Thus, an object of the invention is to provide a method for welding of the flexible conduit element which allows a secure and gas tight welding which can be easily controlled and welded.

A further object of the invention is to provide system wherein a flexible conduit element can be better mounted and securely welded to the connection elements of a combustion engine and exhaust gas system.

The object with regard to the method is solved according to the invention by a method comprising the features of claim 1.

The fixation of the flexible conduit element with different welds has the advantage that in particular the first weld can be controlled for welding mistakes and can be tested on gas tightness. Additionally, for each weld the best welding method can be used. Thus, the components of the flexible conduit element are preferable made of weldable materials, in particular the outer ring and the inner fixing member. Preferably, the outer and the inner connecting member are made of stainless steel. Another advantage of the method according to the invention is that the use of a connecting tube can be omitted and therefore fewer components are necessary.

According to an embodiment of the method, the second weld is welded at a different portion of the outer ring to a portion of the outer ring that is welded by the first weld.. This has the advantage, that none of the welded components get overstressed by the welding and for each welding, different welding methods can be used.

According to another embodiment of the method, the first weld is welded at an end portion of the outer ring that is furthest from the center of the flexible conduit element and the second weld is welded at a side portion of the outer ring different to the end portions thereof, on an outside position located on a circumferential surface of the outer ring . The outside position of the outer ring is the surface of the outer ring, which is exposed to the environment and at least partially reachable by a welding tool.

According to another embodiment of the method, the first weld is welded at an end portion of the inner fixing member that is furthest from the center of the flexible conduit element. The flexible conduit element can then be mounted close to an exhaust gas component of a combustion engine or an inlet opening of an exhaust gas system, in a more conmpact configuration,

According to an embodiment of the method the first weld being made before the inner ring and the outer ring being mounted on the exhaust opening, wherein the second weld being welded when the inner ring and the outer ring are mounted on the exhaust gas component of an combustion engine or the inlet opening of an exhaust gas. The first weld may then be inspected and tested prior to mounting the flexible conduit element.

According to an embodiment of the method the second weld is welded at a side portion of the outer ring (30) different to the end portions thereof, on an outside position located on a circumferential surface of the outer ring.. This has the advantage, that the control of the welds and the welding quality can be optimized.

According to an embodiment of the method the inner fixing member is an inner ring, an inner sleeve, or an end portion of an inner tube.

According to another embodiment of the method the first weld an end portion of a flexible member sandwiched between the inner ring and the outer ring.

According to an embodiment of the method the first weld and second weld are being welded by shielded metal arc welding, gas tungsten arc welding, gas metal arc welding, flux-cored arc welding, submerged arc welding, plasma arc welding, and / or electroslag welding.

The object with regard to the system is solved according to the invention by an system comprising the features of claim 11, which includes an outer ring.

The first and second skirts define a passage and also provide a protected for the adjacent components of the flexible conduit element. Thus, the outer ring functions as a welding spot. Additionally, the ring shaped portion of the outer ring functions as a mounting portion on which a connection portion of a neighboring component part, like a muffler or an exhaust pipe, can be mounted. Additionally, the first and second skirt portion function as a protection against the heat and melt when the neighbouring component part and the end portion of the flexible conduit element are connected by welding via the outer ring.

According to an embodiment of the system ratio between the length (11) of the ring shaped portion (31) and the length (12) of the first skirt portion falls within 5:3 and 1:1, and the ratio between the length (12) of the first skirt portion and the length (13) of the second skirt portion (33) falls within 1:4 and 1:2. These length dimensions allows to shorten the outer ring and to mount the flexible conduit element more compactly.

According to an embodiment of the system the ring shaped portion and the first skirt portion enclose an angle between 120° to 145°. This provides a guiding passage to guide a welding tool to the predetermined position of the second weld.

According to an embodiment of the system, the bellows member is covered by a flexible element, and at least one of the end portions of the bellows member and / or the flexible member is sandwiched between the outer ring and the inner fixing member, wherein the first weld extends between the end surfaces of the outer ring and the inner fixing member and the second weld is provided on the outer ring.

Advantageous embodiments of the method, and the system can be derived from the subclaims.

The invention regarding the method, and the system will be described in detail in the following with reference to the Figures:
Fig. 1 shows in a partial schematic section view, shown in the upper half of Fig. 1, and in a partial exterior view, shown in the lower half of Fig. 1, a flexible conduit element with an outer ring according to an embodiment of the invention,
Fig. 2 shows in an enlarged partial section view of the circular section view A of Fig. 1 of a first outer ring,
Fig. 3 shows in an enlarged partial section view of the circular section view B of Fig. 1 of a second outer ring,
Fig. 4 shows in an enlarged partial section view of the circular section view A of Fig. 1, wherein the welding of the first weld is shown indicated with a welding tool, Fig. 5 shows a schematic overview of a position of the flexible conduit element with the outer ring between a part of an combustion engine outlet and a part of the exhaust gas system in the system according to the invention,
Fig. 6 shows an enlarged view of the square section view C of Fig. 5 with a welding tool welding the second weld, and
Fig. 7 shows in an enlarged partial section view of the circular section view A of Fig. 1, wherein the second weld and the first weld are shown.

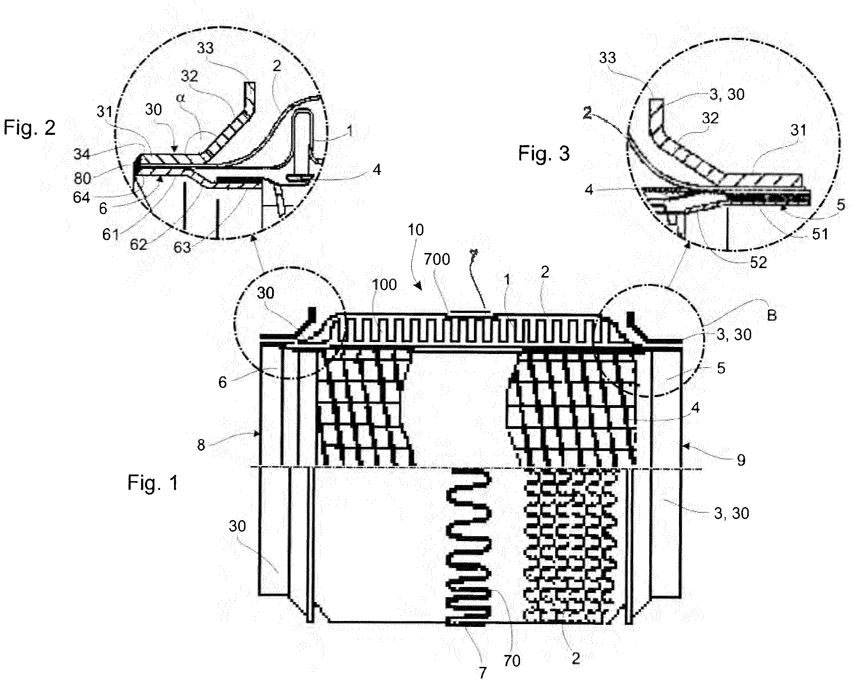

In Fig. 1 an embodiment of a flexible conduit element 10 is shown, wherein the respective components can vary in their shape and can be in some case omitted, like for example the resilient member 7.

The flexible conduit element 10 comprises a metal bellows member 1 with annular or helical corrugations 100. The metal bellows member 1 is surrounded by an outer flexible member 2 which is comprised of a reticulated structure, in particular a net structure of a knitted wire mesh. The net structure is visible in Fig. 1 in the lower half, which depicts an exterior view of the flexible conduit element. The outer flexible member 2 may provide damping and protection but is not essential to all embodiments of the invention.

The upper half in Fig. 1 shows a cross-section of the flexible conduit element 10.

As can be seen in Fig. 1, between the wires of the net structure there are openings which leads to a widely open structure of the net structure. In a view as depicted in Fig. 1, the openings between the wires constitute more than 50%, preferably 75% of the total surface of the essentially cylindrical arrangement of the net structure of the outer flexible member 4.

The flexible conduit element 10 further can comprise a resilient member 7 which is disposed around the outer flexible member 4 and thus also the bellows member 2. The resilient member 7 is a spring member which is substantially ring-shaped surrounding the bellows and the outer flexible member. In order to obtain a tensioning force, the resilient member 7 comprises undulations 70 which allow flexing of the resilient member 7. Resilient member 7 generates a radial tensioning force towards the bellows member 1.

The resilient member 7 can be disposed in a groove 700 and its dimensions are chosen in such a way that the resilient member 5 is more or less received completely within the groove 700. The resilient member 7 pushes the outer flexible member 2 into the groove 700, such that it touches the tips of the corrugations 100 of bellows member 1. However, the flexible conduit element 10 can be also provided without the resilient member 7.

Furthermore, the flexible conduit element 10 comprises within the bellows member 1 an inner tube 4, which is comprised of agrafe-type ring elements. The shape of the agrafe-type ring elements is schematically depicted in the upper half of Fig. 1 which is a section and shows the inner tube. The flexible conduit element 10 may not include an inner tube 4 in some applications. A rigid inner sleeve or similar may also be used instead of an agrafe tube in some applications. A rigid inner sleeve may not extend across the entire length of the flexible conduit element 10.

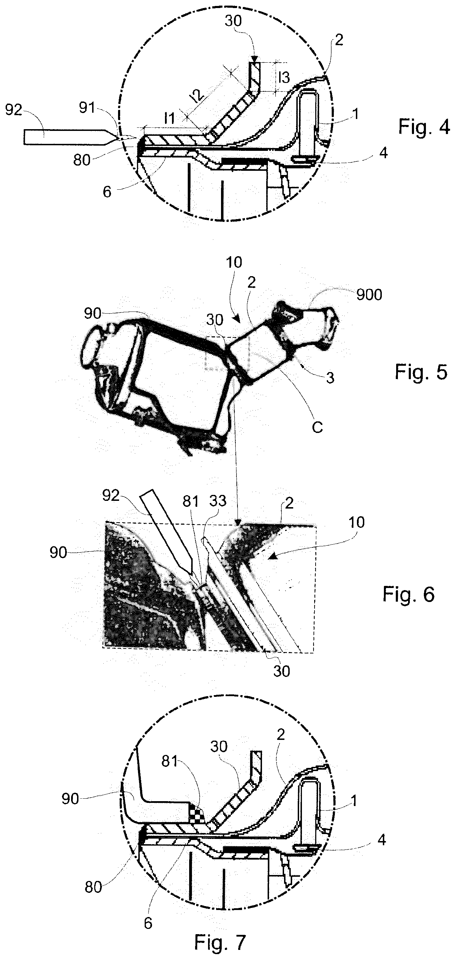

Fig. 1 shows the flexible conduit element 10 for an exhaust system for a combustion engine vehicle. The flexible conduit element 10 is located between a muffler 90 coming from the engine and an exhaust pipe 900 leading to the exhaust gas system. An example of such a configuration with the flexible conduit element 10 between a muffler 90 and an exhaust pipe 900 is shown in Fig. 5. For example, the flexible conduit element 10 is connectable via a first outer ring 33 to the muffler 90 and via a second outer ring 3 to the exhaust pipe 90.

At the end portions of the flexible conduit element 10, the metal bellows member 2 and the outer flexible member 4 abut each other and are held together by two ring-shaped fixing cap means 8, 9.

The fixing cap means 8 comprises a first fixing member and a first outer ring 30 at the end portion of the flexible conduit element 1 where the muffler coming from the combustion engine is to be mounted (see Fig. 6). The first fixing member is a first inner ring 6 which comprises a ring-shaped portion 61 and a flange portion 63 which is connected to the ring-shaped portion 61 by an oblique portion 62. The ring-shaped portion 61 has a larger diameter than the flange portion 63. The first fixing member may also be an end portion of an inner sleeve or the inner tube 4.

The first inner ring 6 can be connected to the first outer ring 30 together by a first weld 80 across the end surfaces 34, 64 of the outer and inner rings 39, 6, shown in Figs. 2 and 4. The outer ring 30, 3 is the welding spot for a second weld 81 between a component of exhaust gas system or engine of a combustion engine.

The fixing cap means 9 comprises a second inner ring 5 and a second outer ring 3 at the opposite end portion of the flexible conduit element 10 where the exhaust pipe 900 leading to an exhaust gas system is to be connected (see Fig. 6). The second inner ring 5 has a ring shaped portion 51, and an oblique portion 52.

The second inner ring 5 can be connected to the second outer ring 3 via a first weld 80. The second outer ring 3 shown in Fig 3 has different dimensions as the first outer ring 30 shown in Fig. 2, since the connection dimensions at the first outer ring 30 are different to the connection dimensions at the second outer ring 3.

In Fig. 1 the first outer ring 30 and the second outer ring 3 substantially have the same dimensions. The inner tube 4 of the flexible conduit element 10 is attached at the one side to inner ring 6, in particular to the flange portion 63 thereof.

The inner tube 4 is attached at the other side to second inner ring 5, in particular to the ring shaped portion 51 thereof.

The inner tube 4 is thereby held between the inner ring 5, 6 and the first and second outer rings 3, 30, respectively. The inner tube 4 which is comprised of an agrafe-type hose is designed in such a way so as not to touch the corrugations of the bellows member 2 in an unbent condition as depicted in Fig. 1.

The end portions of the inner tube 4 may be used instead of either of the inner rings 5, 6. That is to say, a first weld may be made between an outer ring 3, 30 and an end portion of an inner tube.

Fig. 2 shows in an enlarged partial section view of the circular section view A of Fig. 1 the first outer ring 30, comprising a ring shaped portion 31, an oblique first skirt portion 32, and a second skirt portion 33.

In the preferred embodiment the ring shaped portion 31 and the first skirt portion enclose an angle α = 135°. The angle α can be in the range of 120° to 140° depending on the provided space. The first skirt portion 32 extend from the ring shaped portion 31 such that the same defines a gap between the flexible member 2 and the first skirt portion 32, when the outer ring 30 is mounted on the inner ring 6. In particular the inner ring 5, 6 and the outer ring 30, 3 define a seating for receiving the end portions of the flexible member 2 and the bellows member 1.

The outer ring 30, 3 has several functions. A function is to provide a connection between the end portion of the flexible conduit element 10 to an adjacent component like a muffler 900 or an exhaust tube 90. In order to provide an airtight connection the outer ring 30, 3 has to function as a conduit line for en exhaust gas. Another function of the outer ring 30, 3 is to allow an air tight connection between the end portion of the flexible conduit element 10 to an adjacent component like a muffler 90 or an exhaust tube 900. Preferably this connection is achieved via a second weld 81. Thus, the outer ring 30 functions also as a welding spot.

Fig. 3 shows in an enlarged partial section view of the circular section view B of Fig. 1, wherein the end portions of the flexible member 2 and the bellows member 1 are sandwiched between the second outer ring 3, which can comprise also the dimensions of the first outer ring 30 and the second inner ring 5. The second outer ring 3 shown in Fig. 3 has different dimensions with regard to the first outer ring 30 due to the connection space for connecting the second outer ring to the muffler 90.

The fixation of the first outer ring 30 and the first inner ring 6 can also be provided by means of a press fit. But these rings are preferably welded together by a first weld 80.

The fixation of the second outer ring 3 and the second inner ring 5 can be also provided by means of a press fit. But these rings are preferably welded together by a first weld 80 (not shown in the drawings).

Fig. 4 shows in an enlarged section view, indicated with the circular section of Fig. 1, a welding of the first weld 80 by a welding tool 92, wherein welding process is indicated with the flame like symbol 91. Further, the length dimensions of the outer ring 30 are indicated with I1, I2, and I3. The length I1 of the ring shape portion 31, the length of the first skirt 32 portion 31 and the length I3 of the second skirt portion 33 are different to each other. It can be advantageous if the ratio I1:I2 falls within 5:3 and 1:1, and if the ratio I2:I3 falls within 1:4 and 1:2. Preferably the relation of the length I1:I2:I3 is about 10:8:4.

Fig. 5 shows in a semantic view the mounting position of the flexible conduit element 10 with the outer ring 30 positioned between a combustion engine outlet comprising a muffler 90 and a part of the exhaust gas system comprising an exhaust pipe 900 before the second weld 81 is welded. Fig. 6 shows an enlarged view of the section view C of Fig. 5 with a welding tool 92 welding the second weld 81 to an outside surface of the outer ring 30. As can be seen therefrom the first skirt 32 and second skirt 33 protect the adjacent flexible member 2 of the flexible conduit element 10 from the side effects of the welding process.

Fig. 7 shows in an enlarged partial section view according to the circular section view A of Fig. 1, the second weld 81 and the first weld 80 after a second welding step for welding the second weld 81. As can be seen therefrom, the second weld 81 horizontal extends between a side wall end portion of a muffler 90, mountable at the exhaust opening of a combustion engine, and the surface of the outer ring 30.

In an embodiment of a method the inner ring 6 is coaxially mounted into the opening of the first outer ring 30. However, before inserting the inner ring 6 into the first outer ring 30, an end portion of the agrafe-type tube 4 is securely fixed to the flange portion 63 thereof, for example by welding.

Then the end portions of the flexible member 2 and the bellows member 1 are inserted together or shortly after the insertion of the inner ring 6 into the gap between the ring shaped portion 31 of the outer ring 30,3 and the ring-shaped portion 61, 51 of the inner ring 6, 5.

When the end portions of the flexible member 2 and the bellows member 1 are correctly received in this gap defined by the first inner ring 6 and the first outer ring 30, the side portions 34, 64 of the respective end portions of the first outer ring 30 and the first inner ring 6, respectively, are fixed together by the first weld 80, which first weld 80 should be gastight. This first weld 80 also secures the end portions of the flexible member 2 and the bellows member 1 sandwiched in the gap of the first inner ring 6 and the first outer ring 30.

The end portions of the flexible member 2 and the bellows member 1, sandwiched between the inner ring 6 and the outer ring 30, can also be welded with the first weld 80, wherein the welding is started from the outer ring 30 to the inner ring 6.

The side portions 34, 64 can be provided with a welding joint forming the first weld 80. The welding joint can be a V-joint, J-joint, square-joint, and / or flange joint.

The weld 80 can be established with the following welding methods: shielded metal arc welding, gas tungsten arc welding, gas metal arc welding, flux-cored arc welding, submerged arc welding, plasma arc welding, and / or electroslag welding.

The surface of the first weld 80 can be located on the end surface 34, of the outer ring 30 and end surface 64, the inner ring 6. In this configuration a compact secure weld may be efficiently and easily obtained.

The first weld may also be located on an inner side surface of the outer ring 3, 30 and an end surface 64 of an inner ring 5, 6. In this configuration a compact and secure weld may be obtained whilst exposing the outer ring surface in a way that may facilitate the second weld.

The first weld may also be located on an end surface 34 of the outer ring 3, 30 and an outer side surface of an inner ring 5, 6. In this configuration may facilitate welding and inspection of the first weld.

The first weld may 80 directly contact an end portion of the bellows member 1 in order to secure it to the end cap assembly 8, 9 and establish a seal between the bellows member 1 and the outer ring 3, 30. However, this direct contact may not be necessary, and the securing and sealing may be established by mechanical contact as the end portion is sandwiched between the inner ring 5, 5 and the outer ring 3, 30, and the first weld 80 may serve to reinforce and enhance the securing and sealing.

After welding the first weld 80 connecting the first outer ring 30 or the second outer ring 3 to the respective first inner ring 6 and second inner ring 5, the flexible conduit element 10 can be mounted between the predetermined position, for example between a muffler 90 and an exhaust pipe 900, as shown in Fig. 5. Preferably, beforehand, the second inner ring 5 and the second outer ring 3 are mounted at the other end portion and welded via the first weld 80 together, or are press-fitted together.

After mounting the flexible conduit element at the predetermined position between the muffler 90 and the exhaust pipe 900, the flexible conduit element is fixed thereto by a second weld 81.

As can be seen in Fig. 6, the weld material of the second weld 81 must be able to flow into a receiving pocket formed between the end portion of the muffler 90 and the first outer ring 30.

The second weld 81 extends between the side wall end portion of the muffler 90 and the surface of the first outer ring portion 33 and near the first skirt portion 32. The wall end portion of the muffler 90 and the first skirt define the receiving pocket in which the second weld 81 can be welded, as can be seen in Fig. 7.

Advantageously, the second weld 81 is provided between the ring shaped portion of the outer ring 30 and the end portion of the muffler 90,

The fixing cap means 8, 9 may be abutted to the exhaust gas component 90 of a combustion engine or inlet opening 900 of an exhaust gas system. In this case the second weld 81 may partially cover the first weld 80, but if the first weld 80 is welded to an inner surface of the outer ring 30, 3, the outer ring may be abutted directly against the end portion of the muffler 90. In this latter case the first and second welds may be made on inner and outer sides, respectively, of the outer ring,

It may be particularly advantageous to insert the fixing cap means 8, 9 into an exhaust gas component 90 of a combustion engine or an inlet opening 900 of an exhaust gas system, as shown in Fig. 7. The second weld 81 may then be welded at a side portion of the outer ring 30, 3 or of the inner ring different to the end portions thereof, on an outside position located on an outer circumferential surface of the outer ring 30, 3 or the inner ring 5, 6. This may be particularly advantageous in a configuration where the first weld is made on an end surface 84 of the outer ring.

The second weld 81 may also be welded on a surface of the skirt portion 32.Thus, depending on the configuration, interaction between the first and second welds may be reduced, and, depending on the welding conditions and positions, the second weld 81 can be welded with a different welding method than the first weld 80. For example, the first weld 80 can be welded by plasma arc welding, wherein the second weld 81 is welded by another weld method, for example, gas metal arc welding, depending on the gap to be filled with welding material.

### Reference Signs List

- 1: Metal bellows member
- 10: Flexible conduit element
- 100: Annular corrugation
- 2: Flexible member
- 3: Second outer ring
- 30: First outer ring
- 31: Ring shaped portion
- 32: First skirt portion
- 33: Second skirt portion
- 4: inner tube
- 5: Second inner ring (inner fixing member)
- 51: Ring shaped portion
- 52: Oblique portion
- 6: First inner ring (inner fixing member)
- 61: Ring-shaped portion
- 62: Oblique portion
- 63: Flange portion 63
- 7: Resilient elements
- 8: Fixing cap means
- 80: First weld
- 81: Second weld
- 9: Fixing cap means
- 700: Groove
- 90: Muffler, exhaust gas component
- 900: Exhaust pipe

## Claims

1. A method of fixation of an outer ring (30, 3) for a flexible conduit element (10) and securing the flexible conduit element (10) to an exhaust gas component (90) for a combustion engine or an exhaust gas system for a combustion engine vehicle, the flexible conduit element (10) comprising a bellows member (1) to be fixed by an outer ring (30, 3) and an inner fixing member (5, 6) coaxially positioned within the outer ring (30, 3), the method comprising the steps of:
interposing an end portion of the bellows member (1) between the outer ring (30, 3) and the inner fixing member (5, 6); and
welding the inner fixing member (5, 6) and the outer ring (30, 3) together by a first weld (80) to secure the end portion of the bellows member (1) interposed between the inner fixing member (5, 6) and the outer ring (30),
**characterized by**
securing the flexible conduit element (10) to the exhaust gas component (90) or an inlet opening (900) of the exhaust gas system by a second weld (81) welded on an outer surface of the outer ring (30, 3) when the inner fixing member (6, 5) and the outer ring (30, 3) are mounted to the exhaust gas component (90) of a combustion engine or inlet opening component (900) of an exhaust gas system.

2. The method according to claim 1, **characterized in that** the second weld (81) is welded at a different portion of the outer ring (39, 3) to a portion of the outer ring (39, 3) that is welded by the first weld (80).

3. The method according to any of claims 1 or 2, **characterized in that** the first weld is (80) welded at an end portion of the outer ring (30, 3) that is furthest from the center of the flexible conduit element (10).

4. The method according to any of claims 1 to 3, **characterized in that** the second weld (81) is welded at a side portion of the outer ring (30) different to the end portions thereof, on an outside position located on a circumferential surface of the outer ring (30, 3).

5. The method according to any of claims 1 to 4, **characterized in that** the first weld is (80) welded at an end portion of the inner fixing member (5, 6) that is at an end of the inner fixing member (5, 6) furthest from the center of the flexible conduit element (10).

6. The method according to any of claims 1 to 5, **characterized in that** the first weld (80) is made before the inner fixing member (6) and the outer ring (30) is mounted on an exhaust gas component (90) of a combustion engine or an inlet opening (900) of an exhaust gas, and the second weld (81) is welded when the inner fixing member (6) and the outer ring (30) are mounted on the exhaust gas component (90) of an combustion engine or the inlet opening (900) of an exhaust gas.

7. The method according to any of claims 1 to 6, **characterized in that** the first weld (80) is welded using a different method to that of the second weld (81).

8. The method according to any of claims 1 to 7, **characterized in that** the inner fixing member is an inner ring (5, 6), a rigid inner sleeve, or an end portion of an inner tube (4)

9. The method according to any of claims 1 to 8, **characterized in that** the first weld (80) secures an end portion of a flexible member (2) sandwiched between the inner fixing member (6) and the outer ring (30).

10. The method according to any of claims 1 to 9, **characterized in that** the first weld (80) and second weld (81) are welded by shielded metal arc welding, gas tungsten arc welding, gas metal arc welding, flux-cored arc welding, submerged arc welding, plasma arc welding, and / or electroslag welding.

11. A system comprising:
a flexible conduit element (10) comprising an outer ring (30, 3), a bellows member (1) and an inner fixing member (5, 6) coaxially positioned within the outer ring (30, 3); and
an exhaust gas component (90) for a combustion engine or an exhaust gas system for a combustion engine vehicle, wherein
the outer ring (30, 3) is fixed and the flexible conduit element (10) is secured to the exhaust component (90) or the exhaust gas system by the method according to at least of one of the claims 1 to 10,
the outer ring (30) defines a welding space for welding the same from an outside position, the welding space being defined by the outer ring (30, 3) comprising a ring shaped portion (31), a first skirt portion (32) which extends from the ring shaped portion (31) with a firstangle (α), and a second skirt portion (33) which extends from the first skirt portion (32) with a second angle which is different to the first angle, such that the first skirt portion (32) is located between the ring shaped portion (31) and the second skirt portion (32).

12. The system according to claim 11, **characterized in that** the ratio between the length (l1) of the ring shaped portion (31) and the length (l2) of the first skirt portion falls within 5:3 and 1:1, and the ratio between the length (l2) of the first skirt portion and the length (l3) of the second skirt portion (33) falls within 1:4 and 1:2.

13. The system according to claim 11 or 12, **characterized in that** the first angle (α) falls between 120° to 145°.

## Patentansprüche

1. Verfahren zur Fixierung eines äußeren Rings (30, 3) für ein flexibles Leitungselement (10) und zum Befestigen des flexiblen Leitungselementes (10) an einer Abgas-Komponente (90) für einen Verbrennungsmotor oder einem Abgas-System für ein Fahrzeug mit Verbrennungsmotor, wobei das flexible Leitungselement (10) ein mittels eines äußeren Rings (30, 3) zu befestigendes Balg-Teil (1) sowie ein koaxial innerhalb des äußeren Rings (30, 3) angeordnetes inneres Fixier-Teil (5, 6) umfasst, und das Verfahren die folgenden Schritte umfasst:
Einfügen eines Endabschnitts des Balg-Teils (1) zwischen den äußeren Ring (30, 3) und das innere Fixier-Teil (5, 6); sowie
Verschweißen des inneren Fixier-Teils (5, 6) und des äußeren Rings (30, 3) mittels einer ersten Schweißstelle (80) miteinander, um den zwischen dem inneren Fixier-Teil (5, 6) und dem äußeren Ring (30) eingefügten Endabschnitt des Balg-Teils (1) zu befestigen,
**gekennzeichnet durch**
Befestigen des flexiblen Leitungselementes (10) an der Abgas-Komponente (90) oder einer Einlassöffnung (900) des Abgas-Systems mittels einer an einer Außenfläche des äußeren Rings (30, 3) hergestellten zweiten Schweißstelle (81), wenn das innere Fixier-Teil (6, 5) und der äußere Ring (30, 3) an der Abgas-Komponente (90) eines Verbrennungsmotors oder einer Einlassöffnungs-Komponente (900) eines Abgas-Systems montiert sind.

2. Verfahren nach Anspruch 1, **dadurch gekennzeichnet, dass** die zweite Schweißstelle (81) an einem anderen Abschnitt des äußeren Rings (39, 3) hergestellt wird als einem Abschnitt des äußeren Rings (39, 3), der mittels der ersten Schweißstelle (80) verschweißt wird.

3. Verfahren nach einem der Ansprüche 1 oder 2, **dadurch gekennzeichnet, dass** die erste Schweißstelle (80) an einem Endabschnitt des äußeren Rings (30, 3) hergestellt wird, der am weitesten von der Mitte des flexiblen Leitungselementes (10) entfernt ist.

4. Verfahren nach einem der Ansprüche 1 bis 3, **dadurch gekennzeichnet, dass** die zweite Schweißstelle (81) an einem Seitenabschnitt des äußeren Rings (30), der sich von den Endabschnitten des äußeren Rings (30) unterscheidet, an einer äußeren Position hergestellt wird, die sich an einer Umfangsfläche des äußeren Rings (30, 3) befindet.

5. Verfahren nach einem der Ansprüche 1 bis 4, **dadurch gekennzeichnet, dass** die erste Schweißstelle (80) an einem Endabschnitt des inneren Fixier-Teils (5, 6) hergestellt wird, der sich an einem Ende des inneren Fixier-Teils (5, 6) befindet, das am weitesten von der Mitte des flexiblen Leitungselementes (10) entfernt ist.

6. Verfahren nach einem der Ansprüche 1 bis 5, **dadurch gekennzeichnet, dass** die erste Schweißstelle (80) ausgeführt wird, bevor das innere Fixier-Teil (6) und der äußere Ring (30) an einer Abgas-Komponente (90) eines Verbrennungsmotors oder einer Einlassöffnung (900) eines Abgases montiert werden, und die zweite Schweißstelle (81) hergestellt wird, wenn das innere Fixier-Teil (6) und der äußere Ring (30) an der Abgas-Komponente (90) eines Verbrennungsmotors oder der Einlassöffnung (900) eines Abgases montiert werden.

7. Verfahren nach einem der Ansprüche 1 bis 6, **dadurch gekennzeichnet, dass** die erste Schweißstelle (80) unter Einsatz eines anderen Verfahrens als dem der zweiten Schweißstelle (81) hergestellt wird.

8. Verfahren nach einem der Ansprüche 1 bis 7, **dadurch gekennzeichnet, dass** das innere Fixier-Teil ein innerer Ring (5, 6), eine starre innere Hülse oder ein Endabschnitt eines inneren Rohrs (4) ist.

9. Verfahren nach einem der Ansprüche 1 bis 8, **dadurch gekennzeichnet, dass** mit der ersten Schweißstelle (80) ein Endabschnitt eines flexiblen Elementes (2) befestigt wird, der zwischen dem inneren Fixier-Teil (6) und dem äußeren Ring (30) eingeschlossen ist.

10. Verfahren nach einem der Ansprüche 1 bis 9, **dadurch gekennzeichnet, dass** die erste Schweißstelle (80) und die zweite Schweißstelle (81) mittels Metall-Lichtbogenschweißen, Wolfram-Schutzgasschweißen, Metall-Schutzgasschweißen, Metall-Lichtbogenschweißen mit Fülldrahtelektrode, Unterpulverschweißen, Plasma-Lichtbogenschweißen und/ oder Elektroschlackeschweißen hergestellt werden.

11. System, das umfasst:
ein flexibles Leitungselement (10), das einen äußeren Ring (30, 3), einen Balg-Teil (1) und ein inneres Fixier-Teil (5, 6) umfasst, das koaxial innerhalb des äußeren Rings (30, 3) angeordnet ist; sowie
eine Abgas-Komponente (90) für einen Verbrennungsmotor oder ein Abgas-System für ein Fahrzeug mit Verbrennungsmotor, wobei
der äußere Ring (30, 3) fixiert ist und das flexible Leitungselement (10) mit dem Verfahren nach wenigstens einem der Ansprüche 1 bis 10 an der Abgas-Komponente (90) oder dem Abgas-System befestigt wird,
der äußere Ring (30) einen Schweiß-Raum zum Anschweißen desselben von einer äußeren Position aus bildet, wobei der Schweiß-Raum, der durch den äußeren Ring (30, 3) gebildet wird, einen ringförmigen Abschnitt (31), einen ersten Schürzenabschnitt (32), der sich in einem ersten Winkel (α) von dem ringförmigen Abschnitt (31) aus erstreckt, sowie einen zweiten Schürzenabschnitt (33) umfasst, der sich von dem ersten Schürzenabschnitt (32) in einem zweiten Winkel erstreckt, der sich von dem ersten Winkel unterscheidet, so dass der erste Schürzenabschnitt (32) zwischen dem ringförmigen Abschnitt (31) und dem zweiten Schürzenabschnitt (32) angeordnet ist.

12. System nach Anspruch 11, **dadurch gekennzeichnet, dass** das Verhältnis zwischen der Länge (l1) des ringförmigen Abschnitts (31) und der Länge (l2) des ersten Schürzenabschnitts innerhalb von 5:3 und 1:1 liegt und das Verhältnis zwischen der Länge (l2) des ersten Schürzenabschnitts und der Länge (l3) des zweiten Schürzenabschnitts (33) innerhalb von 1:4 und 1:2 liegt.

13. System nach Anspruch 11 oder 12, **dadurch gekennzeichnet, dass** der erste Winkel (α) zwischen 120° und 145° liegt.

## Revendications

1. Procédé de fixation d'une bague externe (30, 3) pour un élément de conduite souple (10) et immobilisation de l'élément de conduite souple (10) sur un composant pour gaz d'échappement (90) d'un moteur à combustion ou pour un système de gaz d'échappement d'un véhicule à moteur à combustion, l'élément de conduite souple (10) comprenant un élément de soufflet (1) à fixer grâce à une bague externe (30, 3) et à un élément de fixation interne (5, 6) positionné de façon coaxiale à l'intérieur de la bague externe (30, 3), le procédé comprenant les étapes suivantes :
l'interposition d'une extrémité de l'élément de soufflet (1) entre la bague externe (30, 3) et l'élément de fixation interne (5, 6), et
le soudage de l'élément de fixation interne (5, 6) et de la bague externe (30, 3) l'un à l'autre grâce à une première soudure (80) afin d'immobiliser l'extrémité de l'élément de soufflet (1) intercalée entre l'élément de fixation interne (5, 6) et la bague externe (30),
**caractérisé par**
l'immobilisation de l'élément de conduite souple (10) sur le composant pour gaz d'échappement (90) ou sur une ouverture d'admission (900) du système de gaz d'échappement par une seconde soudure (81) appliquée sur la surface externe de la bague externe (30, 3) lorsque l'élément de fixation interne (6, 5) et la bague externe (30, 3) sont montés sur le composant pour gaz d'échappement (90) d'un moteur à combustion ou sur un composant d'ouverture d'admission (900) d'un système de gaz d'échappement.

2. Procédé selon la revendication 1, **caractérisé en ce que** la seconde soudure (81) est appliquée au niveau d'une partie différente de la bague externe (39, 3) sur une partie de la bague externe (39, 3) qui est soudée par la première soudure (80).

3. Procédé selon l'une quelconque des revendications 1 ou 2, **caractérisé en ce que** la première soudure (80) est appliquée au niveau de l'extrémité de la bague externe (30, 3) qui est la plus éloignée du centre de l'élément de conduite souple (10).

4. Procédé selon l'une quelconque des revendications 1 à 3, **caractérisé en ce que** la seconde soudure (81) est appliquée au niveau d'une partie latérale de la bague externe (30) différente des extrémités de celle-ci, sur une position externe située sur la surface circonférentielle de la bague externe (30, 3).

5. Procédé selon l'une quelconque des revendications 1 à 4, **caractérisé en ce que** la première soudure (80) est appliquée au niveau d'une partie terminale de l'élément de fixation interne (5, 6) qui se trouve à l'extrémité de l'élément de fixation interne (5, 6) la plus éloignée du centre de l'élément de conduite souple (10).

6. Procédé selon l'une quelconque des revendications 1 à 5, **caractérisé en ce que** la première soudure (80) est réalisée avant que l'élément de fixation interne (6) et la bague externe (30) soient montés sur un composant pour gaz d'échappement (90) d'un moteur à combustion ou sur une ouverture d'admission (900) d'un système de gaz d'échappement ; et la seconde soudure (81) est appliquée lorsque l'élément de fixation interne (6) et la bague externe (30) sont montés sur le composant pour gaz d'échappement (90) d'un moteur à combustion ou sur l'ouverture d'admission (900) d'un système de gaz d'échappement.

7. Procédé selon l'une quelconque des revendications 1 à 6, **caractérisé en ce que** la première soudure (80) est appliquée en utilisant un procédé différent de celui de la seconde soudure (81).

8. Procédé selon l'une quelconque des revendications 1 à 7, **caractérisé en ce que** l'élément de fixation interne est une bague interne (5, 6), un manchon interne rigide ou la partie terminale d'un tube interne (4).

9. Procédé selon l'une quelconque des revendications 1 à 8, **caractérisé en ce que** la première soudure (80) immobilise une partie terminale d'un élément souple (2) intercalée entre l'élément de fixation interne (6) et la bague externe (30).

10. Procédé selon l'une quelconque des revendications 1 à 9, **caractérisé en ce que** la première soudure (80) et la seconde soudure (81) sont appliquées par soudage à arc à électrode enrobée, par soudage à arc à électrode de tungstène, par soudage à arc sous protection gazeuse, par soudage à arc à flux incorporé, par soudage à arc submergé, par soudage à arc de plasma et/ou par soudage à arc sous laitier électroconducteur.

11. Système comprenant :
un élément de conduite souple (10), comprenant une bague externe (30, 3), un élément de soufflet (1) et un élément de fixation interne (5, 6) positionné de façon coaxiale à l'intérieur de la bague externe (30, 3), et
un composant pour gaz d'échappement (90) pour un moteur à combustion ou un système de gaz d'échappement pour un véhicule à moteur à combustion, dans lequel
la bague externe (30, 3) est fixée et l'élément de conduite souple (10) est immobilisé sur le composant d'échappement (90) ou sur le système de gaz d'échappement grâce au procédé conforme à au moins l'une des revendications 1 à 10,
la bague externe (30) définit un espace de soudage permettant de la souder depuis une position externe, l'espace de soudage étant défini par la bague externe (30, 3) comprenant une partie en forme de bague (31), une première partie formant collerette (32) qui s'étend depuis la partie en forme de bague (31) avec un premier angle (α), ainsi qu'une seconde partie formant collerette (33) qui s'étend depuis la première partie formant collerette (32) avec un second angle qui est différent du premier angle de sorte à ce que la première partie formant collerette (32) soit située entre la partie en forme de bague (31) et la seconde partie formant collerette (32).

12. Système selon la revendication 11, **caractérisé en ce que** le rapport entre la longueur (I1) de la partie en forme de bague (31) et la longueur (I2) de la première partie formant collerette se trouve dans la plage comprise entre 5 : 3 et 1 : 1 ; et **en ce que** le rapport entre la longueur (I2) de la première partie formant collerette et la longueur (I3) de la seconde partie formant collerette (33) se trouve dans la plage comprise entre 1 : 4 et 1 : 2.

13. Système selon la revendication 11 ou la revendication 12, **caractérisé en ce que** le premier angle (α) se trouve dans la plage comprise entre 120 et 145 °.
